# DEMANDE DE BREVET EUROPEEN

(11) **EP 0 558 371 A1**
(43) Date de publication de la demande: **01.09.1993**
(21) Numéro de dépôt: 93400372.4
(22) Date de dépôt: 15.02.1993
(51) Int. Cl.: G21C 17/003

(54) **Procédé de contrôle et de réparation de la surface interne d'une pièce tubulaire de traversée du couvercle de la cuve d'un réacteur nucléaire et dispositif pour la mise en oeuvre de ce procédé**

(30) Priorité: 28.02.1992 FR 9202405
(71) Demandeur: FRAMATOME, 92400 Courbevoie (FR); ELECTRICITE DE FRANCE Service National, F-75008 Paris (FR)
(72) Inventeur: Jacquier, Paul, F-69160 Tassin la Demi-Lune (FR); Thomas, André, F-69004 Lyon (FR); Batistoni, Michel, F-71640 Dracy le Fort (FR); Gemma, Antoine, F-77150 Lesigny (FR)
(74) Mandataire: Bouget, Lucien

(57) **Abrégé**

On réalise par usinage à l'intérieur de la manchette thermique (5) au moins une fente (10) traversant la paroi de la manchette (5) dans une direction longitudinale. On introduit une sonde de contrôle (12) dans la manchette thermique (5), de manière à placer la sonde (12) en vis-à-vis de la fente (10). On déplace la manchette thermique (5) en rotation autour de son axe à l'intérieur de la pièce tubulaire (3) et on déplace la sonde (12) longitudinalement par rapport à la manchette thermique (5), suivant la longueur de la fente (10) de manière à réaliser le contrôle de la surface interne de la pièce tubulaire (3), à travers la fente. L'invention concerne également un dispositif d'usinage de la fente (10) pour la mise en oeuvre du procédé suivant l'invention.

## Description

L'invention concerne un procédé de contrôle de la surface interne d'une pièce tubulaire de traversée du couvercle de la cuve d'un réacteur nucléaire refroidi par de l'eau sous pression ainsi qu'un dispositif permettant la mise en oeuvre de ce procédé.

Les réacteurs nucléaires à eau sous pression comportent généralement une cuve renfermant le coeur du réacteur qui est plongé dans l'eau sous pression de refroidissement du réacteur.

La cuve du réacteur de forme générale cylindrique comporte un couvercle de forme hémisphérique qui peut être rapporté sur sa partie supérieure.

Le couvercle est percé d'ouvertures au niveau de chacune desquelles est fixée par soudure, une pièce tubulaire de traversée constituant un adaptateur assurant le passage et la commande de déplacement d'un prolongateur d'une grappe de contrôle de la réactivité du coeur ou un passage de traversée d'un moyen de mesure à l'intérieur du coeur, tel qu'une colonne de thermocouple.

Sur les parties d'extrémité de chacun des adaptateurs, sont fixés les mécanismes de commande de déplacement des grappes de contrôle de la réactivité du coeur.

A l'intérieur de chacune des traversées tubulaires du couvercle de cuve, est fixée, dans une position coaxiale par rapport à la pièce tubulaire de traversée et avec un certain jeu radial, une manchette thermique qui comporte une partie élargie diamétralement venant reposer sur une portée d'appui élargie diamétralement située à la partie supérieure de l'alésage de la pièce tubulaire de traversée et qui est montée libre en rotation à l'intérieur de la traversée.

Les prolongateurs des barres de commande de la réactivité du réacteur nucléaire et les colonnes de thermocouples traversent le couvercle de cuve, à l'intérieur des manchettes thermiques qui sont elles-mêmes disposées coaxialement à l'intérieur des adaptateurs des barres de commande ou plus généralement à l'intérieur des pièces tubulaires de traversée du couvercle.

De manière à accroître la fiabilité et la sûreté de fonctionnement des réacteurs nucléaires et pour prolonger la durée de vie de ces réacteurs, les exploitants sont amenés à effectuer des contrôles de plus en plus nombreux des différents éléments constituant le réacteur nucléaire.

En particulier, il peut être nécessaire de contrôler l'état des pièces de traversée du couvercle de la cuve, pour s'assurer de l'intégrité de ces pièces, après un certain temps de fonctionnement du réacteur, en particulier dans la zone où ces pièces tubulaires sont soudées sur le couvercle de cuve.

Ces contrôles qui doivent permettre de déceler et de réparer des défauts sur la surface interne de la pièce tubulaire de traversée, doivent être effectués par l'intérieur de l'alésage de la pièce tubulaire et nécessitent en conséquence un démontage de la manchette thermique, pour accèder à la surface intérieure de l'alésage de la traversée.

Ces contrôles et réparations doivent être effectués lors d'un arrêt du réacteur nucléaire, le couvercle de la cuve étant démonté.

Cependant, le démontage de la manchette thermique nécessite des opérations complexes, dans la mesure où l'élargissement de la manchette thermique reposant sur une portée d'appui disposée à la partie supérieure de l'adaptateur interdit un démontage de la manchette par traction vers le bas, sur sa partie inférieure accessible en-dessous du couvercle.

En outre, il n'est pas possible non plue de démonter la manchette par traction vers le haut, dans la mesure où les mécanismes de commande de grappes qui sont fixés par vissage et par soudage sur les parties supérieures des adaptateurs interdisent le passage de la manchette thermique.

Il est donc souhaitable de limiter les opérations de démontage complexes des manchettes thermiques, aux adaptateurs présentant effectivement des défauts nécessitant des réparations.

Les opérations de contrôle des pièces de traversée par l'intérieur de leur alésage peuvent être effectuées de manière très efficace en utilisant des sondes de contrôle telles que des sondes à ultrasons ou des sondes à courant de Foucault, dans la mesure où ces sondes peuvent être placées en vis-à-vis ou au contact de la surface intérieure de l'alésage de la pièce de traversée.

On ne connaissait pas jusqu'ici de procédé de contrôle par ultrasons ou par courants de Foucault ou par d'autres méthodes, des pièces tubulaires de traversée d'un couvercle de cuve d'un réacteur nucléaire à eau sous pression qui permette d'effectuer le contrôle de la surface intérieure des pièces de traversée sans démontage des manchettes thermiques.

Le but de l'invention est donc de proposer un procédé de contrôle de la surface interne d'une pièce tubulaire de traversée du couvercle de la cuve d'un réacteur nucléaire refroidi par de l'eau sous pression, fixée par une soudure sur le couvercle de la cuve, à l'intérieur de laquelle une manchette thermique est montée dans une disposition coaxiale avec un certain jeu radial, qui permette d'effectuer le contrôle sans démontage de la manchette thermique.

Dans ce but :
- on réalise au moins une fente traversant la paroi de la manchette dans une direction longitudinale, suivant une génératrice de la manchette et débouchant en vis-à-vis de la surface intérieure de la pièce tubulaire,
- on introduit une sonde de controle dans la manchette thermique, de manière à placer la sonde au niveau de la fente et à permettre de contrôler la surface interne de la pièce tubulaire de traversée à travers la fente, la sonde étant solidaire en rotation de la manchette et libre en translation dans la direction longitudinale.
- on déplace la manchette thermique en rotation autour de son axe, à l'intérieur de la pièce tubulaire, et
- on déplace la sonde longitudinalement par rapport à la manchette thermique, suivant la longueur de la fente, de manière à réaliser un balayage de la surface interne de la pièce tubulaire, dans une zone au moins de cette surface interne.

De préférence, la sonde de contrôle est une sonde à ultrasons qui est placée en vis-à-vis de ou contre la surface interne de la paroi tubulaire de manière à émettre un faisceau d'ultrasons dans la zone de la surface interne de la pièce tubulaire de traversée à contrôler.

Afin de bien faire comprendre l'invention, on va maintenant décrire, à titre d'exemple non limitatif, en se référant aux figures jointes en annexe, un procédé de contrôle par ultrasons suivant l'invention et un dispositif permettant sa mise en oeuvre.

La figure 1 est une vue en coupe par un plan axial, d'un adaptateur de traversée du couvercle de la cuve d'un réacteur nucléaire à eau sous pression dans lequel on effectue un contrôle suivant le procédé de l'invention et suivant un premier mode de réalisation.

La figure 2 est une vue en coupe par un plan axial d'un adaptateur de traversée du couvercle de la cuve d'un réacteur nucléaire à eau sous pression, dans lequel on effectue un contrôle suivant le procédé de l'invention et suivant un second mode de réalisation.

La figure 3 est une vue en coupe par un plan vertical d'un dispositif d'usinage d'une fente dans une manchette thermique d'un adaptateur de traversée d'un couvercle de cuve, pour la mise en oeuvre du procédé suivant l'invention.

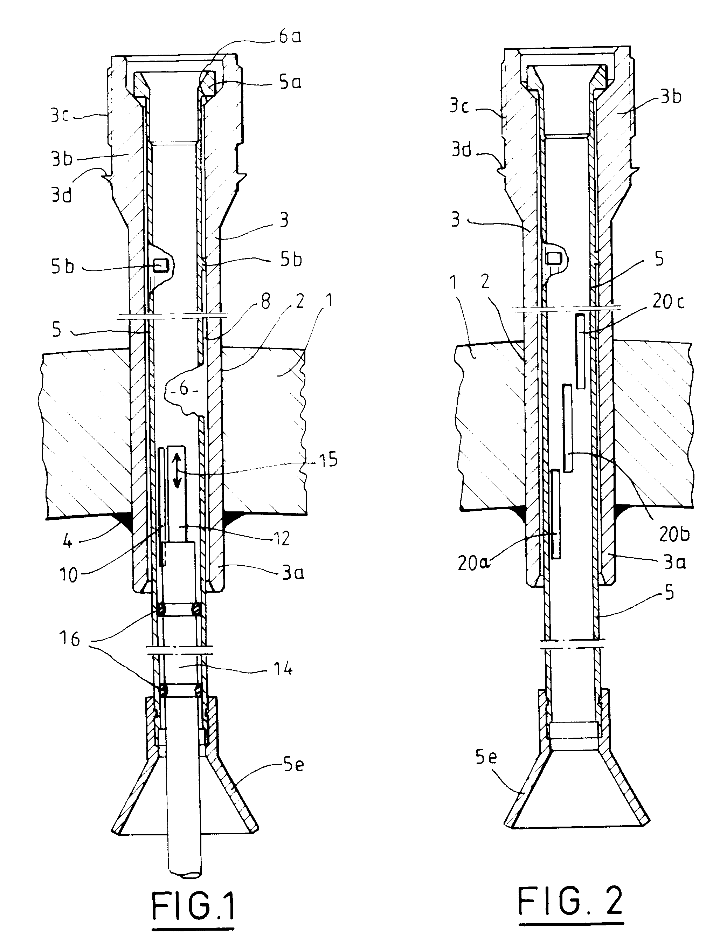

Sur les figures 1 et 2, on voit une partie d'un couvercle 1 d'une cuve d'un réacteur nucléaire à eau sous pression qui est traversé par une ouverture 2 à l'intérieur de laquelle est fixée une pièce tubulaire 3 constituant un adaptateur permettant le passage d'un prolongateur assurant le déplacement d'une grappe de contrôle, à l'intérieur de la cuve du réacteur nucléaire.

L'adaptateur 3 de forme tubulaire comporte une partie courante 3a dont le diamètre correspond au diamètre de l'ouverture 2 et qui est fixée par un cordon de soudure annulaire 4 sur la face interne inférieure du couvercle 1 et une partie supérieure élargie diamétralement 3b située à l'extérieur et au-dessus du couvercle de cuve 1.

Une manchette thermique 5 de forme tubulaire est disposée coaxialement à l'intérieur de l'alésage interne de l'adaptateur 3.

La manchette thermique 5 comporte une partie supérieure 5a élargie diamétralement venant reposer sur une surface d'appui 6a de forme tronconique constituant la partie supérieure de l'alésage interne 6 de l'adaptateur tubulaire 3.

La manchette 5 comporte de plus, sur sa surface externe, au moins un ensemble de trois plots 5b en saillie radiale vers l'extérieur, disposés à 120° les uns des autres par rapport à l'axe de la manchette 5 et venant en appui contre la surface intérieure de l'alésage interne 6 de l'adaptateur 3, lorsque la manchette 5 est montée à l'intérieur de l'adaptateur. Par ce montage, la manchette 5 reste libre en rotation à l'intérieur de l'adaptateur 3.

La manchette 5 présente un diamètre externe sensiblement inférieur au diamètre intérieur de l'alésage 6, de sorte qu'il subsiste un espace annulaire 8 de largeur constante entre la surface externe de la manchette 5 maintenue dans une disposition parfaitement coaxiale à l'alésage 6 par les plots 5b et la surface interne de l'alésage 6.

La partie supérieure élargie diamétralement 3b de l'adaptateur 3 comporte sur sa surface externe un filetage 3c et une lèvre 3d en saillie par rapport à la surface externe de la partie 3b.

Le mécanisme de commande de l'adaptateur 3 permettant le déplacement du prolongateur et de la grappe de commande traversant le couvercle à l'intérieur de l'adaptateur est fixé sur la partie supérieure de l'adaptateur 3 par vissage sur la partie filetée 3c et mise en appui sur la lèvre 3d.

La fixation du mécanisme de commande est complétée par un cordon de soudure d'étanchéité assurant la jonction entre le mécanisme et l'adaptateur, le long de la lèvre 3d.

La manchette thermique 5 est solidaire à sa partie inférieure, en-dessous du couvercle de cuve et de la partie inférieure de l'adaptateur 3, d'un cône de centrage 5e permettant, lors de la pose du couvercle 1 sur la cuve du réacteur, le centrage des extrémités des tiges de commande de grappes constituant des prolongateurs de ces grappes engagées dans la direction verticale à l'intérieur du coeur du réacteur disposé dans la cuve.

Après un certain temps de fonctionnenent du réacteur, il est souhaitable de vérifier l'état des adaptateurs 3 traversant le couvercle de cuve et en particulier de la partie des adaptateurs au niveau de laquelle est réalisée la fixation sur le couvercle de cuve, par l'intermédiaire d'une soudure annulaire telle que 4.

Ce contrôle visant essentiellement la surface interne de l'alésage 6 de l'adaptateur dans la zone de soudure 4 peut être réalisé par un procédé ultrasonore, en utilisant un faisceau d'ultrasons émis par une sonde disposée en vis-à-vis de la surface intérieure de l'alésage 6 de l'adaptateur.

Comme expliqué plus haut, le démontage d'une manchette thermique 5, pour avoir accès à la surface intérieure de l'alésage 6, nécessite des opérations longues et difficiles à réaliser, même après démontage du couvercle de cuve 1.

En utilisant le procédé suivant l'invention, le contrôle de la surface interne de l'adaptateur 3, par ultrasons, au niveau de la zone de soudure 4, peut être effectué sans démontage de la manchette thermique 5.

Selon le mode de réalisation de l'invention représenté sur la figure 1, on réalise, dans un premier temps, le couvercle de la cuve étant démonté et accessible par le dessous, l'usinage d'une fente 10 traversant la paroi de la manchette thermique 5 et débouchant dans l'espace annulaire 8 ménagé entre la manchette thermique 5 et la surface intérieure de l'adaptateur 3.

La fente 10 de direction longitudinale est disposée suivant les génératrices de la manchette thermique 5, dans une zone recouvrant la zone de soudure 4 de l'adaptateur, de manière à rendre accessible par l'intérieur de la manchette thermique, la zone de la surface intérieure de l'adaptateur 3 située au niveau de la zone de soudure 4.

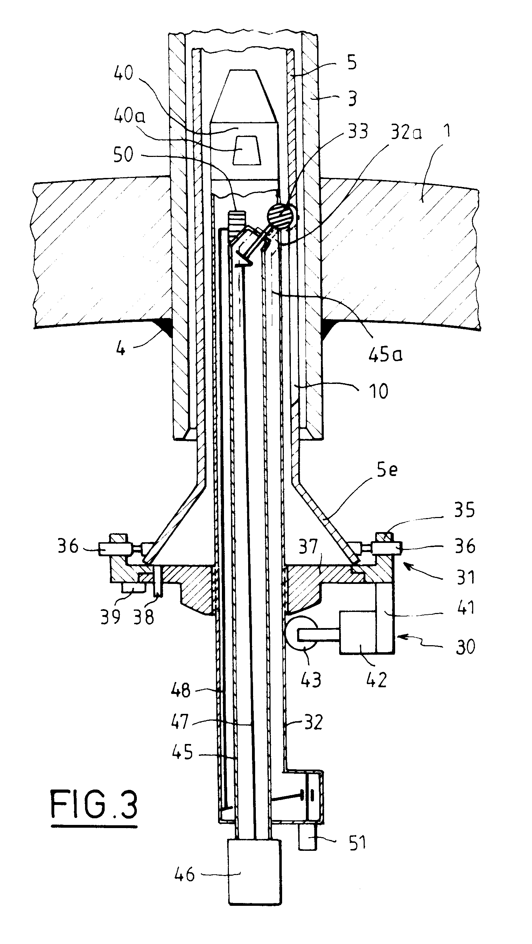

L'usinage de la fente 10 peut être réalisé en utilisant un dispositif tel que représenté sur la figure 3 et qui sera décrit plus loin.

Après usinage de la fente 10, le contrôle proprement dit par ultrasons de l'adaptateur 3 dans la zone de soudage 4 peut être effectué, par exemple en appliquant la sonde contre la surface à contrôler à travers la fente 10.

Pour celà, une sonde à ultrasons 12 portée par un support de sonde 14 est introduite dans la manchette thermique 5, par le dessous de l'adaptateur 3 et du couvercle 1.

La sonde à ultrasons 12 est montée mobile dans la direction axiale dans un sens et dans l'autre sur le support de sonde 14, comme schématisé par la flèche 15.

Des moyens moteurs portés par le support de sonde 14 permettent de déplacer la sonde 12 suivant la direction axiale de la manchette thermique 5 et de l'adaptateur 3, suivant la fente 10 et substantiellement sur toute sa longueur.

Le porte-sonde 14 comporte des moyens de fixation à l'intérieur de la manchette 5 constitués par des joints toriques 16 déformables dans les directions radiales associés à des moyens mécaniques ou pneumatiques assurant leur expansion pour réaliser le blocage du porte-sonde 14 à l'intérieur de la manchette thermique 5.

Grâce aux joints 16 et aux moyens d'expansion associés à ces joints, le support de sonde 14 peut être fixé en position à l'intérieur de la manchette 5, de manière que la sonde à ultrasons 12 puisse se déplacer suivant la fente 10, sur toute sa longueur dans un sens et dans l'autre.

La sonde 12 permet d'émettre un faisceau d'ultrasons contre la surface intérieure de l'adaptateur 3, grâce à la sonde introduite à travers la fente 10 et de recueillir le faisceau d'ultrasons réfléchi par la partie interne de l'adaptateur 3.

Le faisceau réfléchi est analysé de manière à déceler la présence de défauts dans la zone voisine de la soudure 4 de l'adaptateur 3.

Un balayage complet de la zone de la surface interne de l'adaptateur voisine de la soudure 4 est réalisé en déplaçant la sonde dans la direction longitudinale suivant toute la longueur de la fente 10 et en faisant tourner simultanément la manchette thermique 5 autour de son axe à l'intérieur de l'adaptateur 3, par l'intermédiaire du support de sonde 14 dont la partie inférieure est saillante en-dessous du cône de centrage 5e. La sonde 12 qui est solidaire en rotation du support de sonde 14 et mobile dans la direction longitudinale est entraînée en rotation dans le support de sonde 14 et la manchette thermique 5.

Le déplacement simultané de la sonde en translation dans la direction axiale et en rotation permet d'effectuer un balayage hélicoïdal de la surface intérieure de l'adaptateur 3, par le faisceau d'ultrasons émis par la sonde 12.

On pourrait également effectuer le balayage de toute la surface interne à contrôler de l'adaptateur 3, en déplaçant la sonde successivement dans la direction verticale suivant des génératrices de l'adaptateur, avec un déplacement intermédiaire en rotation de la manchette pour passer d'une génératrice à une autre suivant la périphérie interne de l'adaptateur.

Pour effectuer le contrôle d'une zone de l'adaptateur de plus grande longueur dans la direction axiale, par exemple pour contrôler l'adaptateur dans toute la zone de traversée du couvercle de cuve 1, il est possible de réaliser par usinage dans la manchette thermique 5, plusieurs fentes sensiblement identiques 20a, 20b et 20c, comme représenté sur la figure 2.

Les fentes 20a, 20b, 20c sont usinées suivant des génératrices de la manchette 5 et disposées l'une à la suite de l'autre dans la direction axiale de la manchette, avec un léger recouvrement. Les fentes 20a, 20b, 20c sont Egalement décalées dans la direction circonférentielle de la manchette thermique 5 l'une par rapport à l'autre, de manière à constituer des fenêtres séparées pour le passage d'une sonde ou d'un faisceau d'ultrasons successivement à travers chacune des fentes. On évite ainsi d'usiner une fente suivant une longueur importante de la manchette 5.

Sur la figure 2, on a représenté trois fentes permettant de réaliser une inspection et un contrôle de l'adaptateur sur toute la zone de traversée du couvercle mais il est bien évident que l'on peut envisager de réaliser seulement deux fentes ou, au contraire, un nombre de fentes supérieur à trois.

Sur la figure 3, on a représenté un dispositif d'usinage permettant de réaliser des fentes ou lumières de traversée à travers la paroi de la manchette thermique 5 d'un adaptateur 3 fixé dans le couvercle 1 de la cuve d'un réacteur nucléaire.

Le dispositif d'usinage désigné de manière générale par le repère 30 comporte un bâti 31, un corps tubulaire 3b monté rotatif et glissant dans le bâti 31 et un outil 33 constitué par une fraise montée sur une partie du corps 32 qui est introduite à l'intérieur de la chemise thermique 5, pour réaliser l'usinage.

Le bâti 31 comporte une première partie 35 de forme annulaire comportant des moyens 36 de fixation de l'outillage 30 sur le cône de centrage 5e de la manchette thermique 5 constitués par des vis de serrage munies de patins d'appui à leur extrémité dirigée vers l'intérieur.

Le bâti 31 comporte également un plateau 37 en forme de disque monté rotatif sur la partie de fixation 35 du bâti, autour d'un axe qui est confondu avec l'axe du corps tubulaire 32.

Le plateau 37 du bâti comporte un alésage central dans lequel est engagé le corps tubulaire 32. L'alésage du plateau 37 et le corps tubulaire 32 comportent des éléments de guidage longitudinal correspondante, de sorte que le corps tubulaire 32 est monté libre en translation dans la direction axiale et solidaire en rotation du plateau 37.

Le bâti 31 porte un détecteur 38 permettant de vérifier la mise en place correcte du bâti 31 et de l'outillage 30 sur le cône de centrage 5e de la manchette thermique 5.

Le bâti 31 porte également un moyen d'indexage 39 permettant de placer le plateau 37 et le corps 32 de l'outillage 30 dans une orientation parfaitement déterminée autour de l'axe du plateau 37, après la mise en place de l'outillage 30 à l'intérieur de la manchette thermique d'un adaptateur, l'axe du plateau 37 et du corps 32 étant alors confondu avec l'axe commun à l'adaptateur 3 et à la manchette thermique 5.

On peut ainsi usiner une fente 10 dans une position parfaitement définie en orientation autour de l'axe de la manchette thermique 5.

Il est également possible d'usiner plusieurs fentes telles que les fentes 20a, 20b et 20c représentées sur la figure 2, dans des positions différentes en orientation autour de l'axe de la manchette 5.

Le corps 32 de l'outillage 30 comporte, à son extrémité destinée à être introduite dans la manchette 5, un élément de centrage 40 comportant une partie de guidage de forme tronconique et une cage comportant des logements 40a dans lesquels sont disposées des billes, permettent le guidage et le centrage dans une position parfaitement coaxiale, du corps 32 à l'intérieur de la manchette 5.

Le bâti 31 de l'outillage 30 porte, par l'intermédiaire d'un support 41, un moyen de déplacement 42 du corps 32 de l'outil, dans la direction axiale.

Le dispositif 42 comporte un moteur d'entraînement en rotation d'un galet ou pignon 43 en prise avec la surface externe du corps 32. Le moyen motorisé 42 permet d'entraîner le corps 32 dans la direction axiale correspondant à la direction verticale, soit vers le haut soit vers le bas.

Le déplacement dans la direction axiale du corps 32 de support de l'outil 33 permet de placer l'outil en position de travail à l'intérieur de la manchette thermique 5, en début d'usinage d'une fente 10, puis de déplacer l'outil 33 dans la direction axiale, afin de réaliser l'usinage de la fente 10 dans la direction longitudinale de la manchette 5.

A l'intérieur du corps tubulaire 32, est monté un carter 45 dans une disposition sensiblement coaxiale au corps tubulaire 32.

Le carter 45 constitue le support de la fraise rotative 33 qui est fixée sur un axe de rotation engagé dans un palier solidaire de l'une des extrémités du carter 45.

La seconde extrémité longitudinale du carter 45 qui est saillante par rapport à l'extrémité inférieure du corps tubulaire 32 est solidaire d'un moteur 46 d'entraînement en rotation de la fraise 33, par l'intermédiaire d'un axe 47 comportant au moins deux parties articulée entre elles et disposé suivant toute la longueur du carter 45.

En outre, le carter 45 est monté basculant autour d'un axe horizontal à l'intérieur du corps tubulaire 32, de manière à pouvoir être déplacé entre une première position représentée en traits pleins sur la figure 3 et une position basculée 45a représentée de manière partielle, en pointillés.

Le déplacement par basculement du carter entre sa première et sa seconde position permet de réaliser l'avance de la fraise 33, pour usiner la fente 10 sur toute l'épaisseur de la manchette thermique 5.

Le basculement du carter 45 à l'intérieur du corps tubulaire 32 est obtenu par l'intermédiaire d'une tringlerie articulée 48 commandée depuis l'extrémité inférieure du corps tubulaire 32 et entraînant le déplacement d'un talon d'appui incliné 50 venant en contact avec une surface inclinée de la partie d'extrémité du carter 45 voisine de la fraise 33.

Un détecteur 51 fixé sur le corps tubulaire 32 permet de déterminer la position de la tringlerie 48 et donc du carter 45 et de la fraise 33, de manière à contrôler l'avance de la fraise 33 et la profondeur de passe, pendant l'usinage par fraisage de la chemise 5 pour réaliser la fente ou lumière 10.

On va maintenant décrire, en se référant à l'ensemble des figures, une opération de contrôle d'un adaptateur 3 traversant le couvercle 1 de la cuve d'un réacteur nucléaire.

Le couvercle 1 de la cuve est démonté et placé dans une position telle que les adaptateurs 3 et les manchettes thermiques 5 disposées dans ces adaptateurs se trouvent en position verticale.

Pour le contrôle d'un adaptateur quelconque traversant le couvercle de cuve 1 dans lequel est disposée une manchette thermique, on réalise, dans une première phase, l'usinage d'au moins une fente 10 dans la paroi de la manchette.

Pour celà, un outillage tel que l'outillage 30 représenté sur la figure 3 est mis en position à l'intérieur de la manchette thermique. L'extrémité du corps tubulaire 32 de l'outillage 30 est introduite dans le cône de centrage 5e puis dans le corps de la manchette thermique 5 et le bâti 31 est fixé sur le cône de centrage, de manière que le corps tubulaire 32 soit dans une disposition parfaitement coaxiale par rapport à la manchette thermique 5. Le positionnement de l'outil 30 est contrôlé grâce au détecteur 38.

Le carter 45 de l'outil 30 est dans sa première position à l'intérieur du corps tubulaire 32, de sorte que la fraise 33 se trouve dans sa position de retrait vers l'intérieur du corps tubulaire 32, au niveau de la fenêtre 32a traversant le corps tubulaire 32 dans sa partie située à l'intérieur de la manchette thermique 5.

Le corps tubulaire 32 portant la fraise 33 par l'intermédiaire du carter basculant 45 est placé dans une position axiale parfaitement déterminée et contrôlée grâce à un détecteur associé au dispositif de déplacement 42, de manière que la fraise 33 se trouve au niveau de la zone de la manchette thermique 5 correspondant à l'une des extrémités de la fente de traversée 10 à réaliser dans la paroi de la manchette thermique 5.

On réalise alors l'usinage de la fente 10, par commande du basculement du carter 45 de manière à assurer l'avance de la fraise 33 dans la direction radiale et par commande du déplacement axial du corps tubulaire 32 portant le carter 45 et la fraise 33.

La longueur de déplacement correspondant à l'amplitude de la fente dans la direction axiale est contrôlée par le détecteur de déplacement associé au dispositif 42. La profondeur de passe est contrôlée par le détecteur 51.

Lors de l'usinage d'une ou plusieurs fentes successives, la position circonférentielle de la ou des fentes est contrôlée grâce au dispositif d'indexage 39 du plateau 37.

Lorsque la ou les fentes traversant la paroi de la manchette 5 ont été réalisées, l'outillage 30 est démonté et peut être utilisé pour réaliser une ou plusieurs fentes à travers la paroi d'une manchette thermique 5 d'un second adaptateur 3.

Des fentes peuvent être réalisées sur les manchettes thermiques de chacun des adaptateurs dont on veut effectuer le contrôle.

Le contrôle proprement dit est effectué en introduisant une sonde 12 et un porte-sonde tel que 14 à l'intérieur d'une manchette thermique 5 dont la paroi a été usinée pour réaliser au moins une fente traversante 10.

Le porte-sonde 14 est rendu solidaire de la manchette thermique 5, par l'intermédiaire d'un dispositif de serrage interne de type mécanique ou pneumatique tel qu'un dispositif à joint torique expansible 16 tel que représenté sur la figure 1.

Le contrôle d'une zone de la surface interne de l'adaptateur 3 est effectué comme expliqué plus haut, en déplaçant la sonde 12 par rapport au porte-sonde dans la direction axiale, dans un sens ou dans l'autre et en déplaçant simultanément la manchette 5 en rotation autour de son axe, par l'intermédiaire du support de sonde 14.

Lorsqu'un ou plusieurs défauts sont détectée par faisceau d'ultrasons sur la surface interne d'un adaptateur, on repère cet adaptateur, de manière à effectuer une réparation de la paroi.

Après démontage du moyen de contrôle, cette réparation peut être effectuée en démontant la manchette thermique pour intervenir à l'intérieur de l'adaptateur, par exemple, depuis sa partie inférieure ou encore, sans démontage de la manchette, à travers la fente.

La réparation peut être effectuée par exemple en réalisant une couche de remplissage et de protection par nickelage sur la surface intérieure du tube, dans la zone présentant un défaut.

La réparation pourrait être réalisée également en effectuant un affouillement du ou des défauts détectés par le contrôle; cet affouillement peut être réalisé par usinage mécanique ou par électro-érosion à travers la fente usinée dans la manchette. La partie active de l'outil passe à travers la fente pour réaliser l'affouillement. L'outil peut être déplacé dans la direction longitudinale de la fente et simultanément la manchette peut être déplacée en rotation autour de son axe, ce qui permet de réaliser l'affouillement sur toute la zone de la surface interne de l'adaptateur correspondant à la zone présentant des défauts.

La réparation proprement dite est réalisée par un rechargement ou une refusion des défauts par un procédé de soudage tel que le procédé TIG ou MIG ou encore un procédé utilisant un laser. Ce rechargement ou cette refusion peuvent être réalisés à travers la fente de la manchette éventuellement par un déplacement de l'électrode de soudage suivant la longueur de la fente et par un déplacement de la manchette en rotation.

Bien entendu, les opérations décrites ci-dessus peuvent être réalisées également après un démontage de la manchette.

Après réparation de l'adaptateur, une nouvelle manchette thermique est mise en place dans son alésage interne 6. La manchette thermique de remplacement peut être conçue de manière à être démontable.

Il apparaît que le procédé et le dispositif suivant l'invention présentent l'avantage de permettre un contrôle des adaptateurs traversant le couvercle de la cuve d'un réacteur nucléaire, par l'intérieur, sans démontage de la manchette thermique disposée en position coaxiale à l'intérieur de l'adaptateur.

Le démontage de la manchette qui nécessite la mise en oeuvre de moyens complexes n'est effectué que dans le cas où un ou plusieurs défauts sont détectés sur la surface intérieure de l'adaptateur et dans un but de réparation.

L'invention a été mise en oeuvre en usinant dans la manchette thermique une fente longitudinale ou éventuellement plusieurs fentes, d'une dimension réduite.

Le procédé suivant l'invention a pu être mis en oeuvre de manière tout-à-fait satisfaisante, pour le contrôle d'un adaptateur, après usinage d'une fente à travers sa manchette thermique dont la longueur est de l'ordre de 200 mm et la largeur de l'ordre de 5 mm à 20 mm.

L'invention ne se limite pas au mode de réalisation qui a été décrit.

C'est ainsi qu'on peut imaginer d'autres dispositions et d'autres combinaisons de fentes de traversée de la manchette thermique pour effectuer le contrôle de l'adaptateur.

Les moyens pour usiner une ou plusieurs fentes dans la paroi de la manchette thermique peuvent être différents de ceux qui ont été décrits et par exemple constitués par des moyens d'usinage non conventionnels tels qu'une tête d'usinage par jet d'eau, par électro-érosion ou par laser.

On peut utiliser tout type de sonde à ultrasons conçue pour le contrôle des matériaux, dans le cadre du procédé suivant l'invention et tout support de sonde susceptible d'être introduit et fixé à l'intérieur de la manchette thermique.

De manière générale, le procédé suivant l'invention s'applique au contrôle de toute pièce tubulaire de traversée d'un couvercle de cuve d'un réacteur nucléaire à eau sous pression, qu'il s'agisse d'un adaptateur de passage de barres de commande ou d'une traversée pour des moyens de mesure pénétrant dans la cuve du réacteur.

## Revendications

**1.-** Procédé de contrôle de la surface interne d'une pièce tubulaire (3) de traversée du couvercle (1) de la cuve d'un réacteur nucléaire refroidi par de l'eau sous pression, fixée par une soudure sur le couvercle (1) de la cuve, à l'intérieur de laquelle une manchette thermique (5) est montée dans une disposition coaxiale avec un certain jeu radial (8) caractérisé par le fait :
- qu'on réalise au moins une fente (10, 20a, 20b, 20c) traversant la paroi de la manchette (5) dans une direction longitudinale, suivant au moins une génératrice de la manchette (5) et débouchant en vis-à-vis de la surface interne de la pièce tubulaire (3),
- qu'on introduit une sonde de contrôle (12) dans la manchette thermique (5), de manière à placer la sonde (12) au niveau de la fente (10) et à permettre de contrôler la surface interne de la pièce tubulaire (3) à travers la fente (10), la sonde étant solidaire en rotation de la manchette et libre en translation dans la direction longitudinale,
- qu'on déplace la manchette thermique (5) en rotation autour de son axe à l'intérieur de la pièce tubulaire (3), et
- qu'on déplace la sonde (12) longitudinalement par rapport à la manchette thermique (5), suivant la longueur de la fente (10), de manière à réaliser un balayage de la surface interne de la pièce tubulaire (3), dans une zone au moins de cette surface interne.

**2.-** Procédé selon la revendication 1, caractérisé par le fait que la sonde (12) est une sonde à ultrasons placée en vis-à-vis de ou contre la surface interne de la pièce tubulaire (3), de manière à émettre un faisceau d'ultrasons dans la zone de la surface interne de la pièce tubulaire (3) à contrôler.

**3.-** Procédé suivant l'une quelconque des revendications 1 ou 2, caractérisé par le fait qu'on réalise par usinage, une fente 10 dans la direction longitudinale, à travers la paroi de la manchette thermique (5), dans la zone de soudure (4) de l'adaptateur (3) sur le couvercle de cuve (1).

**4.-** Procédé suivant l'une quelconque des revendications 1 et 2, caractérisé par le fait qu'on réalise au moins deux fentes (20a, 20b, 20c) à travers la paroi de la manchette thermique (5), disposées successivement et avec un certain recouvrement dans la direction longitudinale de la manchette thermique (5) et dans des positions décalées angulairement autour de l'axe de la manchette (5), l'une au moins des fentes (20a) étant disposée sur la manchette (5) dans une zone située au niveau de la zone de soudure de la pièce tubulaire (3) sur le couvercle de cuve (1).

**5.-** Procédé de réparation de la surface interne d'une pièce tubulaire dans laquelle on a réalisé un contrôle de défauts par un procédé suivant l'une quelconque des revendications 1 à 4, caractérisé par le fait que, dans le cas où au moins un défaut est détecté sur la surface interne de la pièce tubulaire (3), on réalise la réparation de ce défaut, à travers la fente (10) usinée précéemment pour le contrôle.

**6.-** Dispositif de contrôle de la surface interne d'une pièce tubulaire (3) de traversée du couvercle (1) de la cuve d'un réacteur nucléaire refroidi par de l'eau sous pression, fixée par une soudure (4) sur le couvercle (1) de la cuve, à l'intérieur de laquelle une manchette thermique (5) est montée dans une disposition coaxiale avec un certain jeu radial (8), caractérisé par le fait qu'il comporte un support de sonde (14) comportant des moyens de fixation (16) en position coaxiale à l'intérieur de la manchette thermique (5) et une sonde à ultrasons (12) montée mobile sur le support de sonde (14), dans une direction axiale correspondant à la direction axiale de la manchette thermique (5) et de la pièce tubulaire (3), lorsque le support de sonde (14) est fixé par l'intermédiaire des dispositifs de fixation (16) à l'intérieur de la manchette thermique (5),
ainsi que des moyens de déplacement en translation dans la direction axiale dans un sens et dans l'autre de la sonde à ultrasons (12), par rapport au support de sonde (14).

**7.-** Dispositif d'usinage pour la mise en oeuvre d'un procédé de contrôle de la surface interne d'une pièce tubulaire selon l'une quelconque des revendications 1 à 4, caractérisé par le fait qu'il comporte un bâti (31) comprenant une couronne (35) munie de moyens de fixation (36) sur une partie d'extrémité de la manchette (5) extérieure à la pièce tubulaire (3) et un plateau (37) de forme annulaire monté rotatif sur la couronne (35) autour de l'axe de la couronne confondu avec l'axe de la manchette thermique (5) sur laquelle est fixé le dispositif d'usinage (30),
- un corps tubulaire (32) monté glissant dans la direction axiale dans l'alésage intérieur du plateau annulaire (37) et comportant une pièce de guidage (40) à l'intérieur de la manchette thermique (5) à l'une de ses extrémités,
- un carter (45) monté basculant dans le corps tubulaire (32) autour d'un axe perpendiculaire à l'axe du corps tubulaire (32),
- un outil d'usinage (33) monté rotatif sur une partie d'extrémité du carter (45), à l'intérieur du corps tubulaire (32) au niveau d'une fenêtre (32a) traversant le corps tubulaire (32),
- un moyen d'entraînement en rotation (46) de l'outil (33) solidaire du carter (45),
- un moyen de déplacement (42, 43) du corps tubulaire (32) dans la direction axiale, porté par le bâti (31), et
- des moyens (48, 50) de basculement du carter (45) à l'intérieur du corps tubulaire (32) pour réaliser l'avance d'usinage de l'outil (33) à travers la paroi de la manchette thermique (5).

**8.-** Dispositif suivant la revendication 7, caractérisé par le fait qu'il comporte de plus un détecteur des déplacements du corps tubulaire (32) dans la direction axiale associé au dispositif (42, 43) de déplacement dans la direction axiale.

**9.-** Dispositif suivant l'une quelconque des revendications 7 et 8, caractérisé par le fait qu'il comporte de plus un moyen d'indexage (39) de la position en orientation du plateau annulaire (37) du bâti (31) autour de l'axe de l'anneau de support (35) confondu avec l'axe de la pièce tubulaire (3), dans la position de service de l'outillage (30).

**10.-** Dispositif suivant l'une quelconque des revendications 7, 8 et 9, caractérisé par le fait qu'il comporte de plus un détecteur (51) de la position du carter basculant (45) à l'intérieur du corps tubulaire (32).
